# EUROPÄISCHE PATENTANMELDUNG

(11) **EP 1 219 652 A2**
(43) Veröffentlichungstag der Anmeldung: **03.07.2002**
(21) Anmeldenummer: 01129905.4
(22) Anmeldetag: 15.12.2001
(51) Int. Cl.: C08G 18/08, C08G 18/10, C08G 18/48

(54) **Elastomere mit oligo- und/oder polymeren Hartsegment-Einheiten und Verfahren zu ihrer Herstellung**

(30) Priorität: 30.12.2000 DE 10065792
(71) Anmelder: Institut für Polymerforschung Dresden e.V., 01069 Dresden (DE)
(72) Erfinder: Lehmann, Dieter, 01646 Coswig (DE)
(74) Vertreter: Rauschenbach, Marion, Dipl.-Ing.

(57) **Zusammenfassung**

Die Erfindung bezieht sich auf das Gebiet der Chemie und betrifft Elastomere, die beispielsweise als Weichkomponente in Hart-Weich-Verbunden zum Einsatz kommen können.

Die Aufgabe der Erfindung ist es, Elastomere herzustellen, bei denen die Synthese schneller durchgeführt werden kann.

Gelöst wird die Aufgabe durch Elastomere mit oligo- und/oder polymeren Hartsegment-Einheiten, dadurch gekennzeichnet, dass ein Präpolymer A (Präpo A) als Verbindung vom Typ b - a - (b)ₙ mit n ≥ 0 ist, wobei (a) ein Weichsegment und (b) ein Hartsegment ist, das Präpo A mindestens zwei reaktive Kettenenden aufweist und über eine reaktive Umsetzung mit mindestens difunktionellen Amino- und/oder Hydroxy-Verbindungen kondensiert ist.

Die Aufgabe wird weiterhin gelöst durch ein Verfahren zur Herstellung von Elastomeren, bei dem das Präpo A, hergestellt nach dem Verfahren der anionischen Polymerisation, über eine reaktive Umsetzung mit mindestens einer difunktionellen Amino- und/oder Hydroxy-Verbindungen kondensiert wird.

## Beschreibung

Die Erfindung bezieht sich auf die Gebiete der Chemie, des Maschinenbaus und der Elektrotechnik und betrifft Elastomere mit oligo- und/oder polymeren Hartsegment-Einheiten, die beispielsweise als Weichkomponente in Hart-Weich-Verbunden oder als flexible Komponente oder als Dicht- und Isolationsmaterial zu Einsatz kommen können.

Die aktivierte anionische Polymerisation von Lactamen zu Gußpolyamiden wird technisch seit den 70-er Jahren praktiziert [Übersicht in: W. Becker, D. Braun; Kunststoff-Handbuch 3/4, Polyamide, herausgegeben von I. Bottenbruch, R. Binsack; Kapitel 2.2.2.3 bis 2.2.2.5.2 einschließlich Literaturangaben; Carl Hanser Verlag München Wien, 1998]. Die Synthese von Blockcopolymeren nimmt dar- unter eine besondere Stellung ein.
Bekannt ist, dass acylierte ε-Caprolactam-Verbindungen in der anionischen Polymerisation als Aktivatoren dienen. Analog wirken caprolactamverkappte Isocyanat-Verbindungen. Mit Poly-THF umgesetzte Diisocyanate, die mit ε-Caprolactam verkappt sind, werden schon zur Schlagzähmodifizierung von anionisch hergestellten Polyamiden als Aktivatoren im Unterschuß eingesetzt.

Der Aufbau von carboxylterminierten Polyamid-12 Ketten mit Bisoxazolinen wird von verschiedenen Autoren beschrieben. Vorrangig geht es um den Aufbau zu hochmolekularen Polyesteramiden [Y. Chalamet, M. Taha, J. Polymer Sci. A: Polymer Chem., 35 (1997) 3697 - 3705]. Die Synthese von Blockcopolymeren durch Oligomer-Kopplungsreaktionen in Masse in den Systemen Bisimidazolin / COOH und Bisoxazolin / NH₂ zu hochmolekularen Polymeren sowie zu Poly(poly-ether-blockpolyamid) wird von der Arbeitsgruppe um Fradet beschrieben [T. Fischer, H. Lefebvre, A. Fradet; Macromol. Symp. 118 (1997) 79 - 87; H. Lefebvre, A. Fradet; Macromol. Symp. 122 (1997) 25 - 31]. Die Erhöhung des Molekulargewichtes von Polyestern und Polyamiden mit Aminogruppen mit Bis-acyllactamen in Schmelze wurde von Akkapeddi beschrieben [ M. K. Akkapeddi, J. Gervasi; Polymer Preprints 29 (1997) 567 - 570].

Die Aufgabe der Erfindung ist es, oligomere und/oder polymere Elastomere mit oligo- und/oder polymeren Hartsegment-Einheiten herzustellen, bei denen die Synthese schneller durchgeführt werden kann und lineare aber auch verzweigte bis vernetze Elastomere herstellbar sind.

In einem modifizierten Verfahren zur anionischen Lactampolymerisation werden Produkte mit elastomeren Eigenschaften erhalten. In einem ersten Schritt wird in der Schmelze ein niedrigviskoses Präpolymer A (Präpo A) als Verbindung vom b-a-(b)ₙ-Typ mit n ≥ 0, das ein Weichsegment (a) besitzt und an das ein oder mehrere kurze Oligoamid-Blöcke (b) als Hartsegmenteinheiten gekoppelt sind, hergestellt. Diese oligomeren Verbindungen besitzen weder Polymer- noch Elastomereigenschaften. Die statistische Länge dieser (b)-Blöcke kann praktisch über die eingesetzte Menge an Lactam wie z. B. ε-Caprolactam eingestellt werden.
Die durch die Reaktion mit ε-Caprolactam verkappten Kettenenden der b-a-(b)ₙ-Blöcke mit n ≥ 0 werden mit einem vorzugsweise bifunktionellen Agens in der zweiten Stufe zum hochmolekularen Blockcopolymer mit entsprechenden Elastomereigenschaften aufkondensiert.

Die Synthese läuft nach folgendem Grundmechanismus ab:
(I) 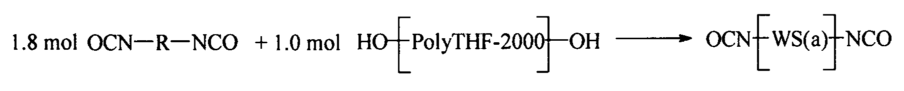
(II) 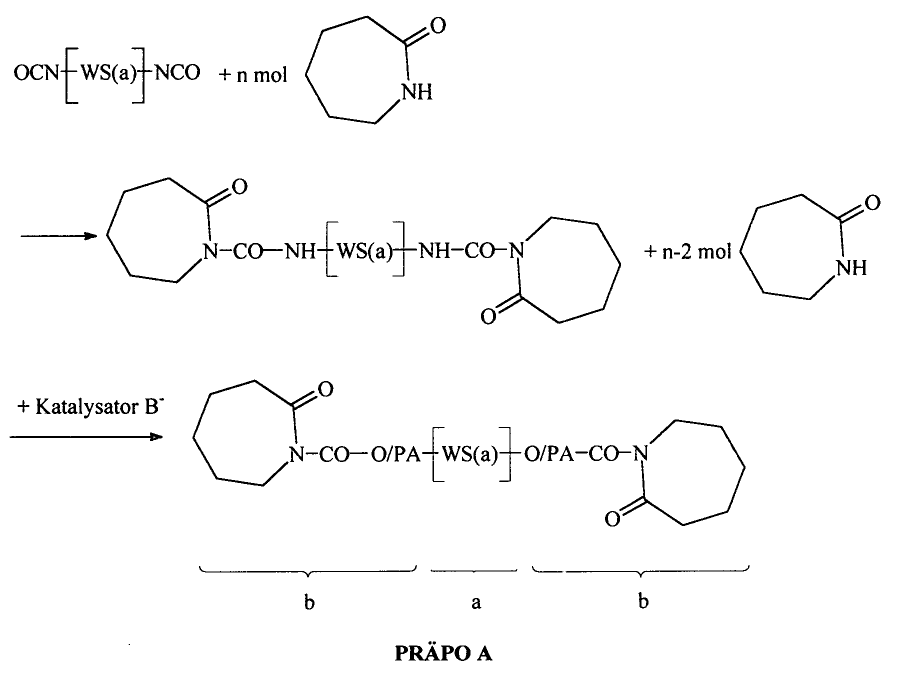
(III) 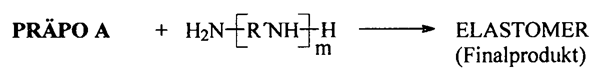
WS(a)= Weichsegment
O/PA = Oligo- und/oder Polyamidsegment

Das Präpo A kann erfindungsgemäß linear oder verzweigt sein und enthält:
- Weichsegmenteinheiten (a),
   - die vorteilhafterweise aus Ether- und/oder Ester-Monomereinheiten aufgebaut sind und Molmassen von mindestens 500 D bis 10 000 D, vorzugsweise 500 D bis 6 000 D aufweisen,
   - die vorteilhafterweise aus einer homogen aufgebauten Weichsegment-Oligomer- oder Polymerkette oder aus einer zusammengesetzten Weichsegment-Oligomer- oder Polymerkette bestehen, wobei die zusammengesetzten Ketten aus gleichen oder verschiedenen oligomeren Weichsegment-Typen aufgebaut und mittels Kopplungsagenzien, wie z.B. Isocyanat-, verkappte Isocyanat- und Acyllactamverbindungen, verbunden sind,
   - die vorteilhafterweise aus Polytetrahydrofuran-Einheiten mit der mittleren Molmasse von 2.000 D mit aliphatischen Diisocyanat-Verbindungen und vorzugsweise mit Hexamathylendiisocyanat verbunden und terminiert sind. Dabei ist dieses Weichsegment (a) vorteilhafterweise in einer Vorreaktion zur anionischen Polymerisation im molaren Verhältnis von 1 : 1,4 bis 1 : 1,95, vorzugsweise 1 : 1,8 hergestellt worden.
   und
- Hartsegmenteinheiten (b), die vorteilhafterweise aus ε-Caprolactam und/oder Laurinlactam an die Weichsegmenteinheit (a) über anionische Polymerisation an mindestens ein Kettenende anpolymerisiert sind und eine Molmasse bis 10.000 D, vorzugsweise bis 5.000 D besitzen.

Das Präpo A hat weiterhin vorteilhafterweise an den Kettenenden
- Acyllactam-Einheiten in Form von solchen Kettenenden, die z.B. bei der Herstellung der Weichsegmenteinheiten (a) eingesetzt wurden oder bei der anionischen Polymerisation entstehen,
und/oder
- reaktiven Einheiten in Form von verkappten Isocyanatgruppen, vorzugsweise von lactamverkappten Isocyanatgruppen.

Die erfindungsgemäßen Elastomere werden erfindungsgemäß hergestellt, indem nach dem Verfahren der anionischen Polymerisation ein Präpo A über eine reaktive Umsetzung mit mindestens einer di- oder polyfunktionellen Amino- und/oder Hydroxy-Verbindung kondensiert wird.

Vorteilhafterweise wird ein lineares Präpo A erfindungsgemäß mit aliphatischen Diamino- und/oder Amino-hydroxy- und/oder Dihydroxy-Verbindungen über einen reaktiven Prozess, vorzugsweise über reaktive Extrusion, zu dem erfindungsgemäßen Elastomer aufgebaut. In einer weiteren Ausführungsform wird das erfindungsgemäße Elastomer mit aliphatischen Diamino-Verbindungen, vorzugsweise mit 1,6-Hexamethylendiamin über reaktive Extrusion aufgebaut.

Eine weitere vorteilhafte Möglichkeit zur Umsetzung eines linearen Präpo A besteht darin, es mit aliphatischen Amino- und/oder Amino-hydroxy- und/oder Hydroxy-Verbindungen mit mehr als zwei funktionellen Gruppen über einen reaktiven Prozess zu einem Elastomer umzusetzen. Dabei entstehen hochmolekulare, verzweigte oder vernetzte Elastomer-Verbindungen.

In einer Vorreaktion wird das lineare oder verzweigte Präpo A hergestellt.
Das Präpo A kann hinsichtlich seiner Molmasse im Bereich von Oligomer bis Polymer liegen.
Die Weichsegmenteinheiten (a) des Präpo A werden vorteilhafterweise durch Umsetzung von Oligomeren oder Polymeren, die aus Ether- und/oder Ester-Monomereinheiten aufgebaut sind und eine Molmasse von mindestens 500 D bis 10.000 D, vorzugsweise bis 6.000 D besitzen, mit reaktiven difunktionellen Verbindungen im molaren Verhältnis von 1 : 1,4 bis 1 : 1,95, vorzugsweise 1 : 1,8 hergestellt.
Dabei können als difunktionelle Verbindungen für die reaktive Umsetzung vorteilhafterweise Diacyllactame und/oder Diisocyanate und/oder vorzugsweise mit Lactam verkappte Diisocyanate zur Umsetzung eingesetzt werden.

Zur Herstellung des Präpo A mit den Hartsegmenteinheiten (b) über anionische Polymerisation wird vorteilhafterweise Lactam als hartsegmentbildende Komponente in Form von ε-Caprolactam und/oder Laurinlactam in einem Masse-Verhältnis von Weichsegment (a) zu Hartsegment (b) von 10 : 90 bis 95 : 5 in Masse-% eingesetzt. Die Reaktionsmischung wird nach den bekannten Kriterien der anionischen Polymerisation zum Präpo A umgesetzt.

Eine vorteilhafte Variante der Erfindung ist es, wenn ein lineares Präpo A mit bevorzugt im äquimolaren Verhältnis an Diamino- und/oder Amino-Hydroxy- und/oder Dihydroxy-Verbindungen, vorzugsweise mit Diamin-Verbindungen und besonders bevorzugt mit Hexamethylendiamin und/oder difunktionellen aminterminierten Polyetherweichsegmenten zu den im Reaktionssystem vorhandenen reaktiv terminierten Endgruppen in Form von verkappten Isocyanatgruppen und/oder Acyllactamgruppen des Präpo A über eine reaktive Umsetzung, vorzugsweise durch reaktive Extrusion, umgesetzt wird.

Ebenfalls vorteilhaft ist es, wenn ein lineares Präpo A nach dem Mischen der Komponenten mit bevorzugt im äquimolaren Verhältnis an Amino- und/oder Hydroxy-Verbindungen mit mehr als zwei funktionellen Gruppen oder im Gemisch mit zwei und mehr funktionellen Gruppen zur Einstellung des Verzweigungs- oder Vernetzungsgrades, vorzugsweise mit Polyamin-Verbindungen und besonders bevorzugt mit Triamin-Verbindungen wie Dipropylentriamin zu den im Reaktionssystem vorhandenen reaktiv terminierten Endgruppen in Form von verkappten Isocyanatgruppen und/oder Acyllactamgruppen des Präpo A über eine reaktive Umsetzung, vorzugsweise in einem Werkzeug, umgesetzt wird.

Zur Herstellung der erfindungsgemäßen Elastomere ist es auch vorteilhaft, wenn verzweigtes Präpo A oder ein Gemisch aus linearem und verzweigtem Präpo A mit bevorzugt im äquimolaren Verhältnis an di- und/oder polyfunktionellen Amino- und/oder Hydroxy-Verbindungen, vorzugsweise mit Diamin- und/oder Triamin-Verbindungen und besonders bevorzugt mit Hexamethylendiamin und/oder difunktionellen aminterminierten Polyetherweichsegmenten und/oder Dipropylentriamin zu den im Reaktionssystem vorhandenen reaktiv terminierten Endgruppen in Form von verkappten Isocyanatgruppen und/oder Acyllactamgruppen des Präpo A über eine reaktive Umsetzung, vorzugsweise in einem Werkzeug, umgesetzt werden.

Die Vorreaktion zum Präpolymer A wird üblicherweise in einem gerührten System/Rührkessel durchgeführt. Die Aufkondensation zu thermoplastisch verarbeitbaren Elastomeren erfolgt vorzugsweise über reaktive Extrusion, wodurch gleichzeitig noch durch die Zwangsmischung ein weitgehend vollständiger Umsatz und damit optimale Werkstoffeigenschaften erhalten werden. Gleichzeitig werden Reste an unumgesetztem und an, in der Kopplungsreaktion freiwerdendem Lactam über die Entgasung aus dem Polymer entfernt.

Mit Veränderung des Verhältnisses an Weichsegment (a) zu Hartsegment (b) im Präpo A zugunsten des Hartsegmentes (b) ist die Härte der Elastomere nach der reaktiven Umsetzung einstellbar.

Produkte, die vernetzt werden sollen, werden nach Homogenisierung der Ausgangsstoffe vorzugsweise direkt durch thermische Behandlung in einem Werkzeug/einer Form hergestellt.
Im weiteren wird die Erfindung an mehreren Ausführungsbeispielen näher erläutert.

In den Beispielen werden neben den Laborversuchen Reaktivumsetzungen mit Zwangsmischung angeführt.

Die linearen Produkte weisen elastomere Eigenschaften auf und sind wiederaufschmelzbar. Die Reaktionsbedingungen und die Werkstoffeigenschaften sind in einem weiten Bereich variierbar.

Erste Vorstufe zur Präpolymersynthese - Herstellung der Weichsegmenteinheit (a) (Herstellung von zwei verschiedenen Weichsegmenteinheiten (a)):
- Weichsegment (a)₁ : Poly-THF[2000/2-OH] : HMDI = 1,8 : 1,0
   Getrocknetes Polytetrahydrofuran (P-THF, mittlere Molmasse 2000 D, hydroxyterminiert, Mol-Verhältnis von 1,8 Isocyanatgruppen zu 1,0 Hydroxygruppen, bezogen auf OH-Zahl) wird in einen 3-Hals-Kolben mit Rührer, Stickstoff-Begasung und Tropftrichter mit Überströmkanal eingewogen. Bei 80°C wird unter Rühren das Hexamethylendiisocyanat (HMDI) im molaren Verhältnis von 1,8 zugetropft. Nach 1 Stunde Rühren wird langsam auf 120°C erwärmt und 1 Stunde nachgerührt.
- Weichsegment (a)₂: Poly-THF[2000/2-OH]: HMDI = 1,0 : 1,5 Synthese analog Weichsegment (a)₁ - veränderte HMDI-Menge (Verlängerung der Weichsegmenteinheiten)

Die beiden Weichsegmenteinheiten werden jeweils in einem 1 I Gefäß in größeren Ansätzen hergestellt und unter inerten Bedingungen in definierten Mengen in gut getrocknete Reaktionsgefäße umgefüllt.

### Synthese des Präpolymers A nach dem Verfahren der anionischen Polymerisation und anschließender reaktiver Umsetzung (Kondensation) (Anionische Polymerisation mit Nachkondensation - Synthese-Grundvorschrift)

X g Weichsegment (a) werden unter inerten Bedingungen in einen getrockneten 3-Hals-Kolben unter Stickstoff umgefüllt (Massebestimmung über Differenzwägung). Y g an ε-Caprolactam (Reinigung über Vakuumdestilation mit Vorlauf) werden unter Stickstoff zudosiert.
Bei Temperaturen größer 100°C (Metallbadtemperatur) wird unter Rühren und Stickstoffspülung der Katalysator (eine Spatelspitze K-tert.-Butylat oder 1,0 ml K-Caprolactamatschmelze [K-CL: hergestellt aus 10 ml ε-Caprolactam und 1 g K-tert.-Butylat unter inerten Bedingungen]) zudosiert. Die Temperatur wird langsam erhöht. Zur Schmelze werden äquimolare Mengen eines bifunktionellen Kettenverlängerers (Zugabemenge errechnet aus Ansatz X g Präpo) zudosiert.

### Vergleichsprobe ohne Nachkondensation (Stand der Technik = bis Herstellung von Präpo A)

Einwaage Weichsegment (a)₂ = 80,6 g Substanz und 20 g ε-Caprolactam werden bei 120°C aufgeschmolzen und gerührt.
Unter Inertgas (N₂) wird als Katalysator eine Spatelspitze K-tert.-Butylat zugegeben. Mit der Temperaturerhöhung auf 170°C wird die Substanz/Schmelze trüb. Nach der Temperaturerhöhung auf 190°C wird die Reaktion nach kurzer Zeit abgebrochen.

Oligomerprodukt - ohne Aufkondensation Substanz als Schmelze: hell, trüb, läßt sich gerade noch ausgießen; Substanz kalt: klebrig, viskos zähflüssig, klar. Das Produkt Präpo A weist keine elastomeren Eigenschaften auf.

### Synthese mit anschließender Kettenaufbaureaktion von Präpo A zu erfindungsgemäßen Elastomeren

### Beispiel 1:

Kettenverlängerung mit Hexamethylendiamin im Rührreaktor:
Einwaage Weichsegment (a)₁ = 80,29 g Substanz und 21,10 g ε-Caprolactam werden im 3-Halskolben mit Rührer, Inertgaszuführung und Rückflußkühler bei 120°C aufgeschmolzen und gerührt. Unter Inertgas (N₂) wird als Katalysator eine Spatelspitze K-tert.-Butylat zugegeben. Mit der Temperaturerhöhung auf 180°C wird die Substanz/Schmelze trüb - Präpo A.
Im gleichen Reaktionssystem wird nach der Zugabe von 3,55 g Hexamethylendiamin unter Rühren die Badtemperatur auf 210°C erhöht und die Reaktion nach kurzer Zeit abgebrochen.
Schmelze viskos; Substanz kalt: fest, elastomere Eigenschaften, Schmelzbereich des Elastomers 185 bis 200°C

### Beispiel 2:

Kettenverlängerung mit Hexamethylendiamin im Laborkneter:
Einwaage Weichsegment (a)₁ = 79,98 g Substanz und 30,49 g ε-Caprolactam - Herstellung des Präpolymer A nach Versuchsdurchführung analog Versuch 1; 49 g des erhaltenen Präpolymer A werden in einen Laborkneter umgefüllt und mit 1,58 g Hexamethylendiamin (HMDA) bei 210°C 5 min mit 80 U/min umgesetzt.
Als Reaktionsprodukt wird eine viskose Schmelze erhalten, die nach dem Abkühlen zu einer Festsubstanz mit elastomeren Eigenschaften erstarrt; Schmelzbereich des Elastomers 205 bis 220°C

### Beispiel 3:

Kettenverlängerung mit Hexamethylendiamin in einem Laborextruder
Einwaage Weichsegment (a)₁ = 76,98 g Substanz mit 21,52 g ε-Caprolactam - Herstellung des Präpo A nach Versuchsdurchführung analog Versuch 1;
Nach der Zugabe von 2 g HMDA zum Präpolymer A wird die Reaktionsmischung als Schmelze dosiert in einem Laborextruder (Wellendurchmesser 16 mm, 60 U/min, Temperaturprofil 190°C-220°C-220°C-160°C-Düse140°C) reaktiv aufkondensiert. Elastomer: Schmelzestrang viskos; Schmelzbereich des Elastomers 190 bis 205°C

### Beispiel 4:

Kettenverlängerung mit Hexamethylendiamin in einem Laborkneter
Einwaage Weichsegment (a)₂ = 79,33 g Substanz mit 30,20 g ε-Caprolactam - Herstellung des Präpo A nach Versuchsdurchführung analog Versuch 1; 49 g des erhaltenen Präpo A werden in einen Laborkneter umgefüllt und mit 1,0 g Hexamethylendiamin (HMDA) bei 210°C 10 min mit 80 U/min umgesetzt. Als Reaktionsprodukt wird eine viskose Schmelze erhalten, die nach dem Abkühlen zu einer Festsubstanz mit elastomeren Eigenschaften erstarrt; Schmelzbereich des Elastomers 170 bis 185°C

### Beispiel 5:

Kettenverlängerung mit Hexamethylendiamin im Rührreaktor:
Einwaage Weichsegment (a)₁ = 79,27 g Substanz + 30,34 g Laurinlactam werden im 3-Halskolben mit Rührer, Inertgaszuführung und Rückflußkühler bei 170°C aufgeschmolzen und gerührt. Unter Inertgas (N₂) wird als Katalysator 1 ml K-CL zugegeben - Temperaturerhöhung auf 190°C; Präpo A.
Im gleichen Reaktionssystem wird nach der Zugabe von 3,55 g Hexamethylendiamin unter Rühren die Badtemperatur auf 210°C erhöht und die Reaktion nach kurzer Zeit abgebrochen.
Elastomer: Schmelze viskos; Substanz kalt: fest, elastomere Eigenschaften, Schmelzbereich des Elastomers 160 bis 180°C

### Beispiel 6:

Kettenverlängerung mit Hexamethylendiamin im Laborkneter:
Einwaage Weichsegment (a)₁ = 78,77 g Substanz und 25,36 g Laurinlactam - Herstellung des Präpo A nach Versuchsdurchführung analog Versuch 5;
49 g des erhaltenen Präpo A werden in einen Laborkneter umgefüllt und mit 0,9 g Hexamethylendiamin (HMDA) bei 210°C in kurzer Zeit mit 80 U/min umgesetzt.

Als Reaktionsprodukt wird eine viskose Schmelze erhalten, die nach dem Abkühlen zu einer Festsubstanz mit elastomeren Eigenschaften erstarrt; Schmelzbereich des Elastomers 170 bis 180°C

### Beispiel 7:

Kettenverzweigung mit Dipropylentriamin:
Einwaage Weichsegment (a)₁ = 81,37 g Substanz + 32,54 g Laurinlactam werden im 3-Halskolben mit Rührer, Inertgaszuführung und Rückflußkühler bei 170°C aufgeschmolzen und gerührt. Unter Inertgas (N₂) wird als Katalysator 1 ml K-CL zugegeben - Temperaturerhöhung auf 190°C; Präpolymer A.
In das Reaktionssystem werden 2,55 g Dipropylentriamin zugegeben und unter Rühren bei 190°C verteilt. Die Badtemperatur wird ohne Rühren auf 220°C erhöht und die Reaktion nach kurzer Zeit abgebrochen.
Substanz heiß - elastomere Masse, nicht als Schmelze vorliegend, Masse muß mechanisch als geleeartige Substanz aus dem Reaktionskolben eliminiert werden; kalt: fest, elastomere Eigenschaften, kein Schmelzen der Elastomermasse (vernetztes Produkt), Schmelzen unter Zersetzung ab ca. 260°C

## Patentansprüche

1. Elastomere mit oligo- und/oder polymeren Hartsegment-Einheiten, **dadurch gekennzeichnet, dass** ein Präpolymer A (Präpo A) als Verbindung vom Typ b - a - (b)ₙ mit n ≥ 0 ist, wobei (a) ein Weichsegment und (b) ein Hartsegment ist, die miteinander verbunden sind und wobei das Hartsegment (b) nach dem Verfahren der anionischen Polymerisation hergestellt ist, dass das Präpo A mindestens zwei reaktive Kettenenden aufweist und dieses Präpolymer A über eine reaktive Umsetzung mit mindestens difunktionellen Amino- und/oder Hydroxy-Verbindungen kondensiert ist.

2. Elastomere nach Anspruch 1, **dadurch gekennzeichnet, dass** das Präpo A linear oder verzweigt ist und mindestens eine Weichsegmenteinheit (a) enthält, die aus Ether- und/oder Ester-Monomereinheiten aufgebaut ist und eine Molmasse von mindestens 500 D bis 10.000 D, vorzugsweise bis 6.000 D besitzen, und über eine reaktive Umsetzung mit mindestens difunktionellen Amino- und/oder Hydroxy-Verbindungen kondensiert ist.

3. Elastomere nach Anspruch 2, **dadurch gekennzeichnet, dass** die Weichsegmenteinheit (a) aus einer homogen aufgebauten Weichsegment-Oligomer- oder Polymerkette oder aus einer zusammengesetzten Weichsegment-Oligomer- oder Polymerkette, die aus gleichen oder verschiedenen oligomeren Weichsegment-Typen aufgebaut und mittels Kopplungsagens verbunden ist, besteht und im Präpo A über eine reaktive Umsetzung mit mindestens difunktionellen Amino- und/oder Hydroxy-Verbindungen kondensiert ist.

4. Elastomere nach Anspruch 3, **dadurch gekennzeichnet, dass** die Weichsegmenteinheit (a) aus Polytetrahydrofuran-Einheiten mit der mittleren Molmasse von 2.000 D besteht und mit aliphatischen Diisocyanat-Verbindungen, vorzugsweise mit Hexamethylendiisocyanat, verbunden ist, das in einer Vorreaktion zur anionischen Polymerisation im molaren Verhältnis von 1 : 1,4 bis 1 : 1,95, vorzugsweise 1 : 1,8 hergestellt wird und im Präpo A über eine reaktive Umsetzung mit mindestens difunktionellen Amino- und/oder Hydroxy-Verbindungen kondensiert ist.

5. Elastomere nach Anspruch 2, **dadurch gekennzeichnet, dass** das lineare oder verzweigte Präpo A mindestens zwei reaktive Kettenenden aufweist und mindestens eine Hartsegmenteinheit (b) enthält, die aus ε-Caprolactam und/oder Laurinlactam an die Weichsegmenteinheit (a) über anionische Polymerisation anpolymerisiert wird und eine Molmasse bis 10.000 D, vorzugsweise bis 5.000 D besitzt und über eine reaktive Umsetzung mit mindestens difunktionellen Amino- und/oder Hydroxy-Verbindungen kondensiert ist.

6. Elastomere nach einem der Ansprüche 1 bis 5, **dadurch gekennzeichnet, dass** das lineare oder verzweigte Präpo A an den mindestens zwei reaktiven Kettenenden Acyllactam-Einheiten in Form von solchen Kettenenden, die bei der anionischen Polymerisation entstehen und/oder reaktive Einheiten in Form von verkappten Isocyanatgruppen, vorzugsweise von lactamverkappten Isocyanatgruppen besitzt und über eine reaktive Umsetzung mit mindestens difunktionellen Amino- und/oder Hydroxy-Verbindungen kondensiert ist.

7. Elastomere nach einem der Ansprüche 1 bis 6, **dadurch gekennzeichnet, dass** das lineare Präpo A mit aliphatischen Diamino- und/oder Amino-hydroxy- und/oder Dihydroxy-Verbindungen über einen reaktiven Prozess, vorzugsweise über reaktive Extrusion zu hochmolekularen Verbindungen kondensiert ist.

8. Elastomere nach einem der Ansprüche 1 bis 7, **dadurch gekennzeichnet, dass** das lineare Präpo A mit aliphatischen Diamino-Verbindungen, vorzugsweise mit 1,6-Hexamethylendiamin über reaktive Extrusion zu hochmolekularen Verbindungen kondensiert ist.

9. Elastomere nach einem der Ansprüche 1 bis 6, **dadurch gekennzeichnet, dass** das lineare Präpo A mit aliphatischen Amino- und/oder Amino-hydroxy- und/oder Hydroxy-Verbindungen mit mehr als zwei funktionellen Gruppen über einen reaktiven Prozess in einer Form zu hochmolekularen, verzweigten oder vernetzten Verbindungen kondensiert ist.

10. Elastomere nach einem der Ansprüche 1 bis 6, **dadurch gekennzeichnet, dass** das verzweigte Präpo A mit aliphatischen Amino- und/oder Amino-hydroxy- und/oder Hydroxy-Verbindungen mit mehr als einer funktionellen Gruppe über einen reaktiven Prozess in einer Form zu hochmolekularen, verzweigten oder vernetzten Verbindungen kondensiert ist.

11. Verfahren zur Herstellung von Elastomeren nach einem der Ansprüche 1 bis 10, **dadurch gekennzeichnet, dass** das Präpo A, hergestellt nach dem Verfahren der anionischen Polymerisation, über eine reaktive Umsetzung mit mindestens einer difunktionellen Amino- und/oder Hydroxy-Verbindungen kondensiert wird.

12. Verfahren zur Herstellung von Elastomeren nach Anspruch 11, **dadurch gekennzeichnet, dass** die Weichsegmenteinheit(en) (a) im linearen und/oder verzweigten Präpo A in einer Vorreaktion durch Umsetzung von Oligomeren oder Polymeren, die aus Ether- und/oder Ester-Monomereinheiten aufgebaut sind und eine Molmasse von mindestens 500 D bis 10.000 D, vorzugsweise bis 6.000 D besitzen, mit reaktiven difunktionellen Verbindungen im molaren Verhältnis von 1 : 1,4 bis 1:1,95, vorzugsweise 1:1,8, hergestellt werden.

13. Verfahren zur Herstellung von Elastomeren nach einem der Ansprüche 11 oder 12, **dadurch gekennzeichnet, dass** als reaktive difunktionelle Verbindungen in der Vorreaktion Diacyllactame und/oder Diisocyanate und/oder vorzugsweise mit Lactam verkappte Diisocyanate zur Herstellung der Weichsegmenteinheiten (a) eingesetzt werden.

14. Verfahren zur Herstellung von Elastomeren nach Anspruch 11, **dadurch gekennzeichnet, dass** zur Herstellung des Präpo A Lactam als hartsegmentbildende Komponente in Form von ε-Caprolactam und/oder Laurinlactam in einem Masse-Verhältnis von Weichsegment zu Hartsegment von 10 : 90 bis 95 : 5 in Masse-% zum Weichsegment zugesetzt wird und die Reaktionsmischung nach den bekannten Kriterien der anionischen Polymerisation zum Präpo A umgesetzt wird.

15. Verfahren zur Herstellung von Elastomeren nach einem der Ansprüche 11 bis 14, **dadurch gekennzeichnet, dass** das lineare Präpo A mit bevorzugt im äquimolaren Verhältnis an Diamino- und/oder Amino-Hydroxy- und/oder Dihydroxy-Verbindungen, vorzugsweise mit Diamin-Verbindungen und besonders bevorzugt mit Hexamethylendiamin und/oder difunktionellen aminterminierten Polyetherweichsegmenten zu den im Reaktionssystem vorhandenen reaktiv terminierten Endgruppen des Präpo A in Form von verkappten Isocyanatgruppen und/oder Acyllactamgruppen über eine reaktive Umsetzung, vorzugsweise durch reaktive Extrusion umgesetzt werden.

16. Verfahren zur Herstellung von Elastomeren nach einem der Ansprüche 11 bis 14, **dadurch gekennzeichnet, dass** das lineare Präpo A nach dem Mischen der Komponenten mit bevorzugt im äquimolaren Verhältnis an Amino- und/oder Hydroxy-Verbindungen mit mehr als zwei funktionellen Gruppen oder im Gemisch mit zwei und mehr funktionellen Gruppen zur Einstellung des Verzweigungs- oder Vernetzungsgrades, vorzugsweise mit Polyamin-Verbindungen und besonders bevorzugt mit Triamin-Verbindungen wie Dipropylentriamin zu den im Reaktionssystem vorhandenen reaktiv terminierten Endgruppen des Präpo A in Form von verkappten Isocyanatgruppen und/oder Acyllactamgruppen über eine reaktive Umsetzung, vorzugsweise in einer Form oder einem Werkzeug umgesetzt werden.

17. Verfahren zur Herstellung von Elastomeren nach einem der Ansprüche 11 bis 14, **dadurch gekennzeichnet, daß** das verzweigte Präpo A oder ein Gemisch aus linearem und verzweigtem Präpo A mit bevorzugt im äquimolaren Verhältnis an di- und/oder polyfunktionellen Amino- und/oder Hydroxy-Verbindungen, vorzugsweise mit Diamin- und/oder Triamin-Verbindungen und besonders bevorzugt mit Hexamethylendiamin und/oder difunktionellen aminterminierten Polyetherweichsegmenten und/oder Dipropylentriamin zu den im Reaktionssystem vorhandenen reaktiv terminierten Endgruppen des Präpo A in Form von verkappten Isocyanatgruppen und/oder Acyllactamgruppen über eine reaktive Umsetzung, vorzugsweise in einer Form oder einem Werkzeug umgesetzt werden.
